# EUROPEAN PATENT SPECIFICATION

(11) **EP 0 956 494 B1**
(45) Date of publication and mention of the grant of the patent: **01.10.2003**
(21) Application number: 98905278.2
(22) Date of filing: 09.01.1998
(51) Int. Cl.: G01N 11/14, E21B 49/00

(54) **METHOD FOR MEASURING THE CHARACTERISTICS OF A DRILLING MUD OR ANALOGOUS FLUID**
VERFAHREN ZUR MESSUNG DER EIGENSCHAFTEN EINES BOHR-SUDS ODER EINER ÄHNLICHEN FLÜSSIGKEIT
PROCEDE SERVANT A MESURER LES CARACTERISTIQUES D'UN FLUIDE DE FORAGE OU ANALOGUE

(30) Priority: 09.01.1997 FR 9700134
(43) Date of publication of application: 17.11.1999
(73) Proprietor: SOFITECH N.V., 1180 Bruxelles (BE)
(72) Inventor: VIGNEAUX, Pierre, F-77950 Moisenay (FR); LE ROY-DELAGE, Sylvaine, F-75015 Paris (FR)
(74) Representative: Hyden, Martin
(86) International application number: EP9800097
(87) International publication number: WO98030885

(56) References cited:
- EP-A- 0 384 792
- GB-A- 2 257 256
- GB-A- 2 275 342
- US-A- 4 458 528
- US-A- 4 557 142
- US-A- 4 648 264

## Description

The present invention concerns an apparatus for measuring certain rheological characteristics of a petroleum industry (or analogous) fluid such as a drilling mud or a cement slurry. More particularly, the invention is applicable to evaluating the tendency of a drilling mud to stick and to measuring the gelation of a fluid.

Drilling of wells such as an oil, gas, geothermal or analogous well uses different fluids the rheological characteristics of which must be known with as much precision as possible, preferably measured at the time the fluid is prepared, at the drill site. During the drilling operation proper, a fluid or drilling mud is circulated in the drilled hole, which mud, inter alia, cools and lubricates the drilling tool, causes the drilling debris to rise to the surface, prevents formation fluids (in particular gas) from entering, and maintains stability by preventing the walls from collapsing. Once the hole is drilled, a casing or coiled tubing is lowered into the hole and cemented over all or part of its length, the cement slurry being injected inside the casing or tubing to then fill the annular space between the casing and the wall of the well. In addition to the mechanical function of holding the casing or tubing in position, cementing can isolate the different formation layers traversed by the hole, prevent gas from rising via the annulus or limit the ingress of water into the production well. Its main purpose, of course, is to ensure the stability of the casing.

Very schematically, a cement slurry is constituted by a liquid base (water and soluble additives) and solid materials (cement) in suspension in that base.

Drilling mud is principally constituted by a liquid base, generally water, oil or a water-in-oil emulsion, salts or other substances in solution in the base and insoluble solids in the base, such as barite or bentonite added, to adjust the density and viscosity of the fluid.

Such fluids, like the majority of fluids used in oil wells, are thixotropic fluids in which the viscosity falls after a certain shear time and which gels when at rest. Such thixotropy is generally characterised by measuring the strength of the gel formed after a rest time of ten seconds, for example, then again after ten minutes. However, the majority of apparatus developed so far cannot satisfactorily simulate the pressure and temperature conditions in a well.

Further, when a fluid is in contact with a relatively porous formation and if the hydrostatic pressure of the formation is lower than the pressure of the drilling fluid, the fluid tends to penetrate into the formation. However, the pores of the formation are generally smaller in size than that of the solid particles in suspension in the fluid. This produces a filtering effect with a flow of liquid base and the finest solids into the formation and deposition of the less fine solid particles on the walls to form a cake, termed a mud cake when the fluid is a drilling mud.

Mud cake formation is in itself a propitious phenomenon as it tends to render the well walls impermeable and thus limits drilling fluid loss. However, the drillpipes, logging tools or casing elements may rub and become embedded in the cake when such elements do not rotate for long periods. This type of occurrence is difficult to avoid since the drilling mud is often circulated for months on end. To free an element which is embedded in the cake, a very high torque must be applied to the element, which torque is not always immediately available, also risking breakage and resulting interruptions to the drilling operation, leading to heavy extra costs.

British patent GB-A-2 275 342 describes an apparatus for evaluating the tendency of a drilling mud to stick by measuring the torque required to cause a ball to rotate in contact with a porous surface through which a drilling mud is forced to pass to form a cake. This apparatus can also measure the quantity of liquid which has flowed through the wall after 30 minutes (measuring the fluid loss). However, this apparatus has disadvantages, in that it has transpired that the results are not always reproducible from one technician to another and in particular, the torque measured is systematically higher by a friction factor which depends on the type of drilling mud and is thus not constant.

US-A-4 458 528 discloses an apparatus for evaluating the tendency of a metal drilling pipe to stick to the wall of a well being drilled. A filter cake is built onto a sandstone disk and pressure is applied to a plunger to press it onto the filter cake. The amount of compression required for sealing it to the filter cake and then, the torque required for rotating the plunger after the plunger has been held in engagement with the sandstone disk for a specific length of time are measured. EP-0 384 792 further discloses an apparatus for measurement of the stick tendency of a fluid in which the lower face of the detection member is brought into contact with the filter surface.

A viscosity measuring device is known from US-A-4 557 142 according to which a bob is rotated though a fluid. GB-A-2 2 257 256 describes a consistometer for measuring rheological changes. US--4 648 264 describes a multi-function apparatus for testing a sample a slurry to determine the compressibility, thickening time and the static gel strength by driving a paddle through the sample.

The aim of the present invention is thus to provide a method for evaluating the tendency of a drilling mud to stick, which method has improved reproducibility.

The present invention provised a method for measuring the tendency of a drilling mud to stick that is characterized by the features set forth in claim 1.

An apparatus for measuring the characteristics of a petroleum industry fluid, in particular for measuring the tendency of a drilling mud to stick, is constituted by a cell, one wall of which is constituted by a porous surface in contact with the mud, means for applying pressure to the fluid and forcing it through said porous surface, a detection means with a spherical surface immersed in the fluid, drive means for rotating said detection means with respect to the fluid in the cell, and means for measuring the resistance torque, characterized by means for maintaining a constant distance which is as small as possible but non-zero between said detection means and the porous surface.

The detection means is constituted, for example, by a ball with a radius of curvature which is typically of the order of 2 cm to 3 cm, more generally less than 10 cm, preferably less than 5 cm, but any surface of revolution with a spherical portion can be used, in particular a spherical cap or a truncated surface, the point of which has a radius of curvature of the order of 2 cm to 5 cm, for example.

The apparatus known from GB-A-2 275 342 is constituted by a pressurized cell, the base of which is formed by a screen with the surface facing the inside of the cell being covered with filter paper to simulate the wall of a hole. The cell is provided with a cover with a central passage for a rod, with a ball fixed at the extremity thereof. The cell is filled with the mud to be tested and the ball is lowered until it just touches the filter paper. Gas is injected above the mud to simulate the pressure difference between the mud and the formation fluids. As the thickness of the mud cake slowly increases, the torque T required to initiate rotation of the ball is measured by means of a sensor associated with the rod. According to the model used by the authors, that torque is proportional to a sticking factor *s* which is characteristic of a given mud and proportional to *t*^{3/4}, where t is the time over which that differential pressure is applied.

That model is based on the implicit hypothesis that the friction between the ball and the filter paper is a constant. The authors of the present invention have found, however, that in practice, this hypothesis is erroneous: the pressure differential is such that suction is produced towards the bottom of the ball which tends to dig it to a greater or lesser extent into the screen which, in the limiting case, is then deformed. That disadvantage is avoided by the modification to the apparatus which is proposed in the present invention, namely maintaining a fixed distance between the ball and the porous wall.

This fixed distance can be maintained using, for example, bearings disposed on the cell cover. Thus the ball is no longer placed on the porous surface but suspended above it. The distance between the lowest point of the ball and the porous surface is of the order of 0.1 mm, which means that all types of drilling mud can be tested, including highly lubricating muds such as oil based muds.

In a particularly preferred embodiment of the invention, the ball is rotated using a magnetic transmission. This means that rotary joints between the high and low pressure zones can be avoided, which joints could generate a variable and unstable frictional torque dependent on the pressure, while improving operator safety.

Further, this type of transmission means that very weak torques can be measured. It is thus possible to convert the apparatus for measuring the tendency of a drilling mud to stick very easily into a variable temperature and pressure rheometer for measuring the gel strength in a thixotropic fluid.

Further advantageous details and characteristics of the invention will become apparent from the following description made with reference to the accompanying drawings which show, by way of example:
- In Figure 1, a schematic view of an apparatus for measuring the tendency of a drilling mud to stick in accordance with the invention;
- In Figure 2, a schematic view of the apparatus of Figure 1 modified to measure the gel time of a petroleum industry fluid;
- In Figure 3, a representative curve for gelling of a cement slurry, measured for 3 slurries with the same formulations using the apparatus shown in Figure 2.

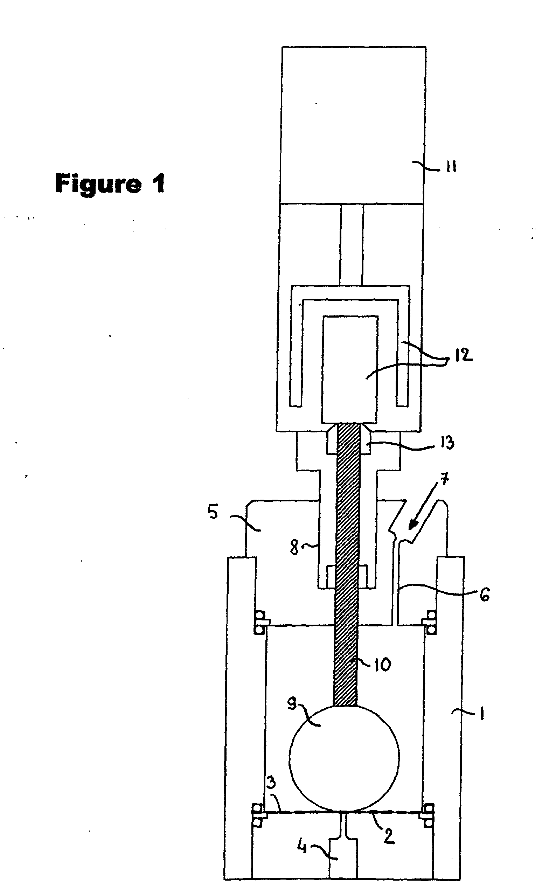

A measuring apparatus for use in the method of the invention is shown in Figure 1. It comprises a measuring cell which can be placed in a thermostatted bath. Cell 1 comprises a base 2 constituted by a screen, the face towards the interior of the cell being covered with a filter paper 3. A drain 4 under cell 1 recovers the filtrate.

The cell is closed by a cover 5 pierced with an opening 6 for supply 7 of a gas, nitrogen or carbon dioxide, used to pressurize the cell. Cover 5 is also provided with a central passage 8 provided with a packing.

The detection means is constituted by a ball 9 fixed on an axle 10 which is rotatable by a drive system 11 via a magnetic transmission 12. Axle 10 is supported by a bearing 13 comprising fine adjusting means for regulating the vertical position of ball 9 to precisely position the ball such that the latter does not rest on screen 2 but remains suspended above it at a small but non-zero distance.

The sticking factor is determined by assuming that the height *h* of the mud cake increases in accordance with a function of the type *h*=*βt*^{*1*}^{/*2*}, where β is constant for a given mud at a fixed temperature and pressure, that the growth of the mud cake is not affected by the ball, that there is no sliding at the cake/ball interface and that the stress exerted by the mud cake is constant over the entire thickness of the cake (or, in other words, the cake is homogeneous over its entire thickness). If these hypotheses are true, the torque *T* which must be exerted at an instant *t* to cause the ball to turn can be calculated and is expressed by a function of the type
*T = S (t*^{*1*}^{/*2*} -*t*_{*0*}^{*1*}/ ^{*2*})^{*3*/*2*} where *t*_{*0*} is the time interval between commencement of measurement and the instant the mud cake reaches the lowest point of the ball, and *S* is a characteristic factor of the mud cake at a given temperature and pressure.

By way of example, a water-based drilling mud was prepared using a mineral thickening agent (VISPLEX type) and adding 0%, 2% and 5% (percentage by volume ) respectively of an IDLUBE-XL type lubricant (VISLEX and IDLUBE-XL are both trade marks of Schlumberger Dowell). The torque (in mN.m) was measured at 5 minute intervals using a cell at 20°C pressurized to 500 psi (3.44 MPa).

| | | | |
|---|---|---|---|
| additives → | 0% | 2% | 5% |
| Time (minutes)↓ | *Torque (in wN.m)* | | |
| 5 | *9.8* | *75.6* | *49.7* |
| 10 | *123.3* | *96.2* | *59.7* |
| 15 | *145.6* | *103.0* | *66.5* |
| 20 | *165.4* | *113.0* | *72.6* |
| 25 | *183.9* | *125.0* | *75.6* |
| 30 | *198.0* | *134.0* | *80.3* |
| regression coefficient → | *0.998* | *0.987* | *0.982* |
| sticking factor in mNm/min^{3/4}→ | *10.8* | *5.9* | *3.2* |

Calculation of the linear regression coefficient R2 for the torque measurements as a function of the time to the ¾ power shows that these latter agree well with the proposed model. The reducing effect of a given lubricant on the sticking tendency of a drilling mud is precisely quantified by the sticking factor calculation.

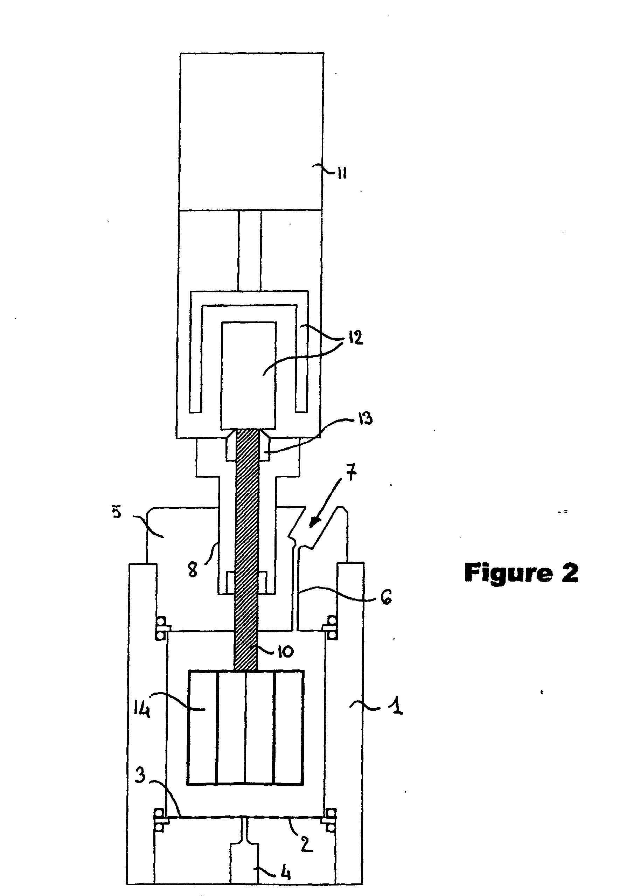

The apparatus shown in Figure 1 can easily be transformed into a rheometer as shown in Figure 2 to measure the rheology at the temperature and pressure of cement slurries. The only modification consists of replacing the rod 10/ball 9 assembly with a rod 10 carrying at least one vane such as rotor blades 14.

With such an apparatus provided with a six-blade rotor in accordance with API recommendations, mounted in the position for the ball used for drilling muds, the rheology of a cement slurry was measured by preparing three identical samples obtained by mixing a class G Portland cement, 1.5% (with respect to the weight of the cement) of calcium chloride, and water to obtain a density of 1.89 g/cm³.

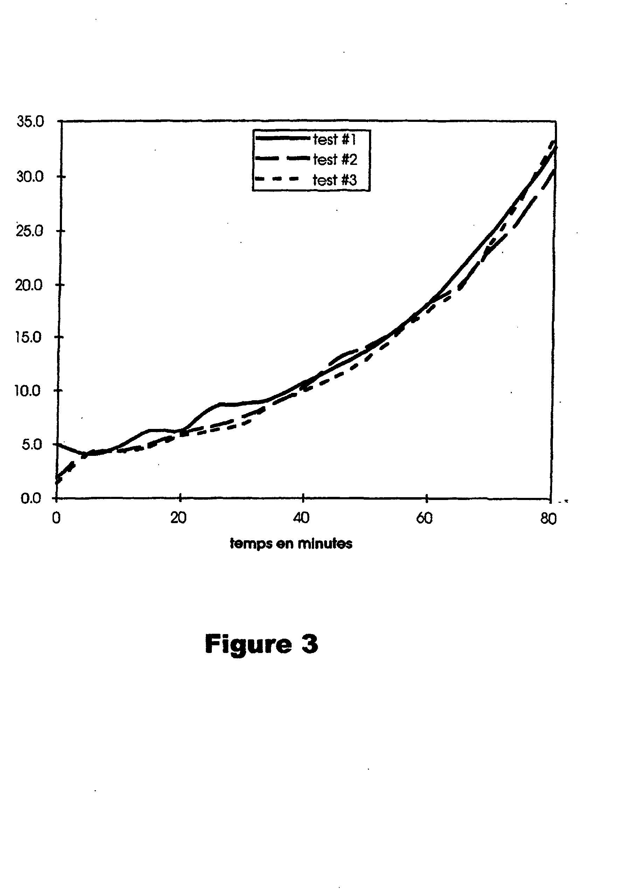

The results are shown in the table below, and the corresponding curves are shown in Figure 3. They show that despite the low torques measured, the same apparatus can reliably measure the rheology of a cement slurry, in accordance with the API regulations.

| Time in minutes | Torque (in mN.m) | | |
|---|---|---|---|
| 0 | 5.0 | 2.0 | 1.4 |
| 5 | 4.1 | 4.1 | 4.1 |
| 10 | 4.7 | 4.4 | 4.4 |
| 15 | 6.4 | 5.0 | 4.7 |
| 20 | 6.4 | 6.1 | 5.8 |
| 25 | 8.5 | 6.7 | 6.4 |
| 30 | 8.8 | 7.6 | 7.0 |
| 35 | 9.4 | 8.8 | 8.8 |
| 40 | 10.8 | 10.5 | 10.0 |
| 45 | 12.3 | 12.9 | 11.4 |
| 50 | 13.8 | 14.1 | 12.9 |
| 55 | 15.8 | 15.8 | 15.5 |
| 60 | 18.2 | 18.2 | 17.6 |
| 65 | 21.4 | 20.0 | 19.7 |
| 70 | 24.7 | 23.2 | 23.8 |
| 75 | 28.5 | 26.4 | 28.2 |
| 80 | 32.6 | 30.9 | 33.8 |

## Claims

1. A method for measuring the tendency of a drilling mud to stick, consisting of placing a detection means with a spherical surface close to a porous wall, pouring drilling mud around the detection means, forcing the mud through the porous surface to form a mud cake above the porous surface and around the detection means and measuring the resistance torque of the detection means as the fluid is forced through the porous surface so as to build a filter cake thereon, **characterized in that** a distance of the order of 0.1 mm is constantly maintained between the detection means and the porous surface while the filter cake builds on the porous surface.

## Patentansprüche

1. Verfahren zum Messen der Anhaftungsneigung von Bohrschlamm, das darin besteht, ein Erfassungsmittel mit einer sphärischen Oberfläche in der Nähe einer porösen Wand anzuordnen, Bohrschlamm um das Erfassungsmittel zu gießen, den Schlamm durch die poröse Oberfläche zu zwingen, um über der porösen Oberfläche und um das Erfassungsmittel einen Schlammkuchen zu bilden, und Messen des Gegendrehmoments des Erfassungsmittels, wenn das Fluid durch die poröse Oberfläche gezwungen wird, um darauf einen Filterkuchen auszubilden, **dadurch gekennzeichnet, daß** zwischen dem Erfassungsmittel und der porösen Oberfläche konstant ein Abstand in der Größenordnung von 0,1 mm aufrechterhalten wird, während sich der Filterkuchen auf der porösen Oberfläche ausbildet.

## Revendications

1. Procédé pour mesurer la tendance au collage d'une boue de forage, consistant à placer un moyen de détection ayant une surface sphérique près d'une paroi poreuse, verser la boue de forage autour du moyen de détection, forcer la boue à travers la surface poreuse à former un cake de boue au-dessus de la surface poreuse et autour du moyen de détection et mesurer le couple de résistance du moyen de détection lorsque le fluide traverse de force la surface poreuse de façon à former un cake de filtration dessus, **caractérisé en ce qu'**une distance de l'ordre de 0,1 mm est maintenue de manière constante entre le moyen de détection et la surface poreuse alors que le cake de filtration se forme sur la surface poreuse.
